# EUROPEAN PATENT APPLICATION

(11) **EP 4 556 374 A1**
(43) Date of publication of application: **21.05.2025**
(21) Application number: 24210491.7
(22) Date of filing: 04.11.2024
(51) Int. Cl.: B64D 37/32, B64D 13/06

(54) **SYSTEM FOR SUPPLYING SOURCE AIR TO AN AIR SEPARATION MEMBRANE OF A FUEL INERTING SYSTEM**

(30) Priority: 16.11.2023 US 202318511193
(71) Applicant: Hamilton Sundstrand Corporation, Charlotte, NC 28217-4578 (US)
(72) Inventor: KILCHYK, Viktor, Lancaster, NY, 14086 (US); COUTIN, Aiden, South Windsor, 06074 (US)
(74) Representative: Dehns

(57) **Abstract**

A system supplying air to an ASM of an aircraft inerting system, having: a first compressor (130), a turbine (140) and a motor-generator (150) coupled to each other; a second compressor (160) coupled to the turbine (140) and ASM; a first flow-path receiving cabin air and having: a first branch coupled to the first compressor (130); and a second branch coupled to the turbine (140), the motor-generator (150) operates in a generator mode when pressure in the first flow-path is above a threshold; a second flow-path coupled between the first compressor (130) and second compressor (160); a third flow-path coupled between the second compressor (160), a fuel tank and ASM; a first heat exchanger coupled to the second branch of the first flow-path to heat flow through the second branch before providing it to the turbine (140); and a second heat exchanger coupled to the second flow-path between the first compressor (130) and second compressor (160) to cool the flow through the second flow-path.

## Description

### BACKGROUND

The embodiments are directed to inerting systems and more specifically to a system for supplying source air to an air separation membrane of an aircraft.

Cabin exhaust air has elevated air pressure and air flow. Thus, this air has available energy that is typically wasted. In addition, the configuration of air inerting systems on aircrafts can require a supply of energy and a minimum airflow for proper operation, and that may result in further wasted energy.

### BRIEF SUMMARY

Disclosed is a system for supplying source air to an air separation membrane (ASM) of an inerting system of an aircraft, the system including: a first compressor; a turbine, operationally coupled to the first compressor; a motor-generator, operationally coupled to the first compressor and the turbine; a second compressor, operationally coupled to the turbine and configured to be fluidly coupled to the air separation membrane; a first flow-path configured to receive cabin air from a cabin of the aircraft, the first flow-path having: a first branch, fluidly coupled to the first compressor; and a second branch, fluidly coupled to the turbine, wherein the motor-generator operates in a generator mode when pressure in the first flow-path is above a threshold; a second flow-path, fluidly coupled between the first compressor and the second compressor; a third flow-path, fluidly coupled between the second compressor, a fuel tank and the ASM; a first heat exchanger, operationally coupled to the second branch of the first flow-path to heat flow through the second branch before it is provided to the turbine; and a second heat exchanger, operationally coupled to the second flow-path between the first compressor and the second compressor to cool the flow through the second flow-path.

In addition to one or more of the above disclosed aspects of the system or as an alternate, the motor-generator operates in a motor mode and drives the turbine when pressure in the first flow-path is below the threshold.

In addition to one or more of the above disclosed aspects of the system or as an alternate, a third heat exchanger, operationally coupled to the third flow-path to cool the flow through the third flow-path, wherein the air separation membrane is disposed in the third flow-path, between the third heat exchanger and the fuel tank.

In addition to one or more of the above disclosed aspects of the system or as an alternate, the system includes an exhaust flow-path, fluidly coupled to the turbine.

In addition to one or more of the above disclosed aspects of the system or as an alternate, the first heat exchanger receives engine bleed air to heat the flow through the second branch.

In addition to one or more of the above disclosed aspects of the system or as an alternate, the second heat exchanger receives RAM air to cool the flow through the second flow-path.

In addition to one or more of the above disclosed aspects of the system or as an alternate, the third heat exchanger receives RAM to cool the flow through the third flow-path.

In addition to one or more of the above disclosed aspects of the system or as an alternate, the system includes a fourth heat exchanger, operationally coupled to the exhaust flow-path and an aircraft system cooling path, to cool the flow through the aircraft system cooling path, thereby cooling an aircraft system.

In addition to one or more of the above disclosed aspects of the system or as an alternate, the system includes a fourth flow-path that receives the cabin air and is fluidly coupled to one or both of the motor-generator and the second heat exchanger.

In addition to one or more of the above disclosed aspects of the system or as an alternate, the fourth flow-path is fluidly coupled to both of the motor-generator and the second heat exchanger.

In addition to one or more of the above disclosed aspects of the system or as an alternate, the fourth flow-path is fluidly coupled to the second heat exchanger; and the exhaust flow-path is fluidly coupled to the turbine and the motor-generator to cool the motor-generator.

In addition to one or more of the above disclosed aspects of the system or as an alternate, the exhaust flow-path is fluidly coupled to a compressor of a gas turbine engine.

Further disclosed is another system for supplying source air to an air separation membrane (ASM) of an inerting system of an aircraft, the another system including: a first compressor; a turbine, operationally coupled to the first compressor; a motor-generator, operationally coupled to the first compressor and the turbine, a second compressor, operationally coupled to the turbine and configured to be fluidly coupled to the air separation membrane; a first flow-path configured to receive cabin air from a cabin of the aircraft, the first flow-path having: a first branch, fluidly coupled to the first compressor; and a second branch, fluidly coupled to the turbine, wherein the motor-generator operates in a generator mode when pressure in the first flow-path is above a threshold; a second flow-path, fluidly coupled between the first compressor and the second compressor; a third flow-path, fluidly coupled between the second compressor, a fuel tank and the ASM; and one heat exchanger, operationally coupled to the second flow-path to cool flow through the second flow-path before it is provided to the turbine.

In addition to one or more of the above disclosed aspects of the another system or as an alternate, the motor-generator operates in a motor mode and drives the turbine when pressure in the first flow-path is below the threshold.

In addition to one or more of the above disclosed aspects of the another system or as an alternate, the another system further includes another heat exchanger, operationally coupled to the third flow-path between the first compressor and the second compressor to cool the flow through the third flow-path, wherein the air separation membrane is disposed in the third flow-path, between the another heat exchanger and the fuel tank.

In addition to one or more of the above disclosed aspects of the another system or as an alternate, the another system further includes an exhaust flow-path, fluidly coupled to the turbine.

In addition to one or more of the above disclosed aspects of the another system or as an alternate, the one heat exchanger receives RAM air to cool the flow through the second flow-path.

### BRIEF DESCRIPTION OF THE DRAWINGS

The following descriptions should not be considered limiting in any way. With reference to the accompanying drawings, like elements are numbered alike:

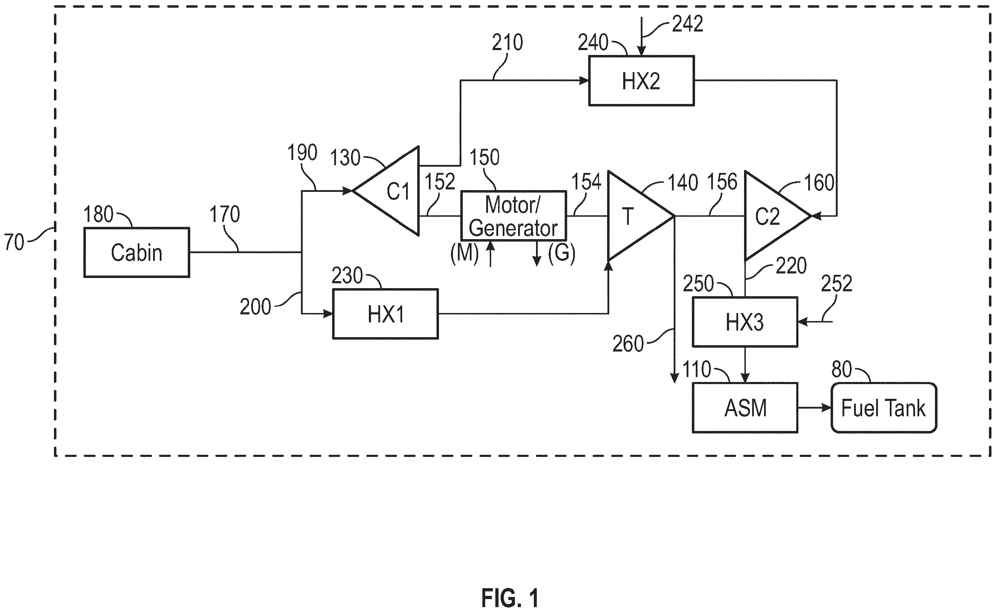

FIG. 1 shows a system for supplying source air to an air separation membrane of an inerting system of an aircraft according to an embodiment, where cabin air is utilized to drive a turbine so that a motor-generator may operate in a generator mode;

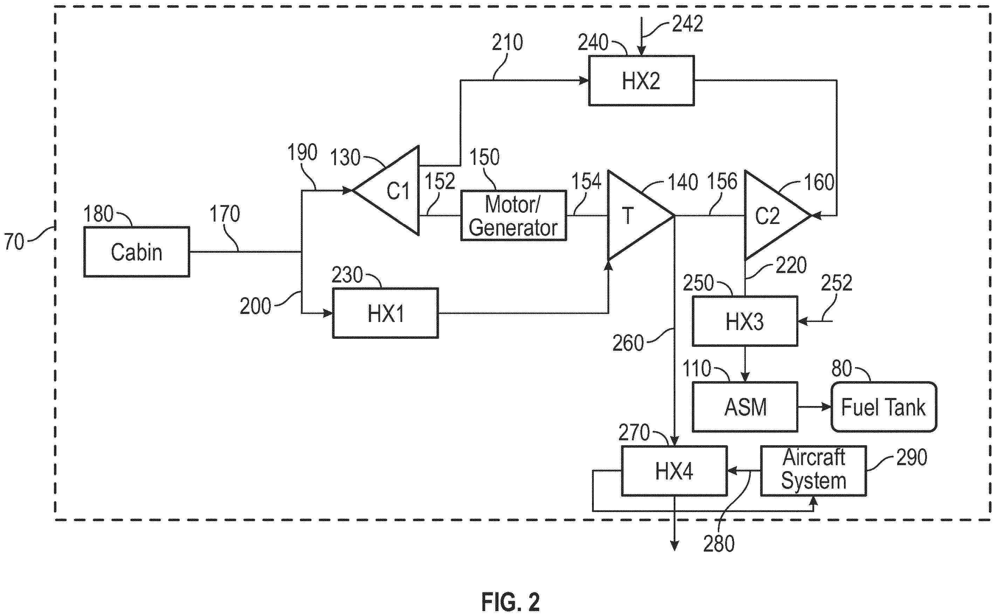

FIG. 2 shows a system for supplying source air to an air separation membrane of an aircraft according to an embodiment, where cabin air is utilized to drive a turbine so that a motor-generator may operate in a generator mode, and a turbine exhaust of the system is utilized to cool an aircraft system;

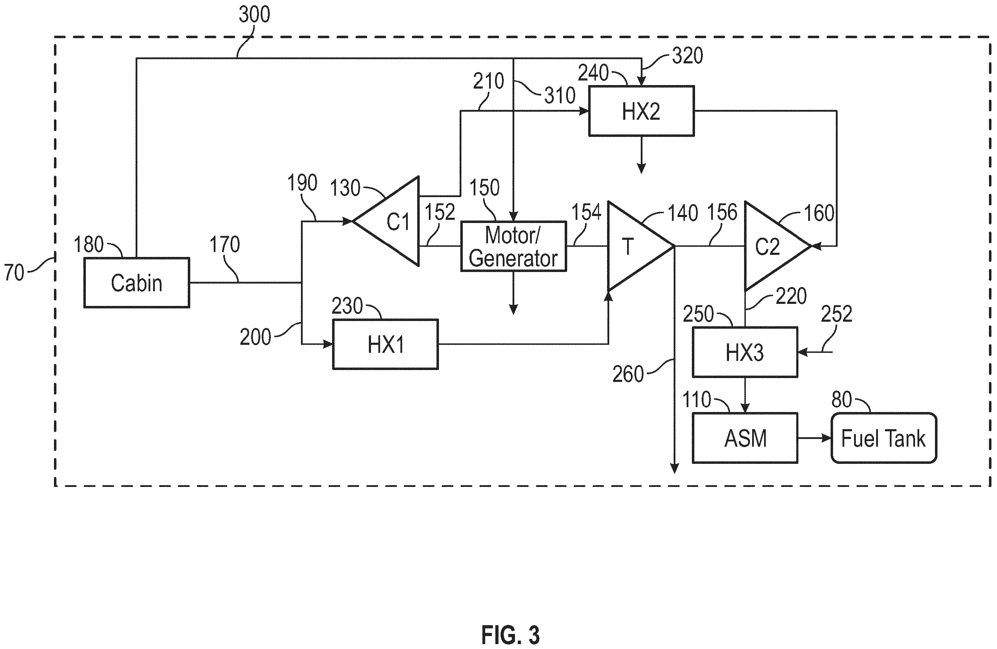

FIG. 3 shows a system for supplying source air to an air separation membrane of an aircraft according to an embodiment, where cabin air is utilized to drive a turbine so that a motor-generator may operate in a generator mode, the motor-generator and as a cooling fluid in a heat exchanger of the system;

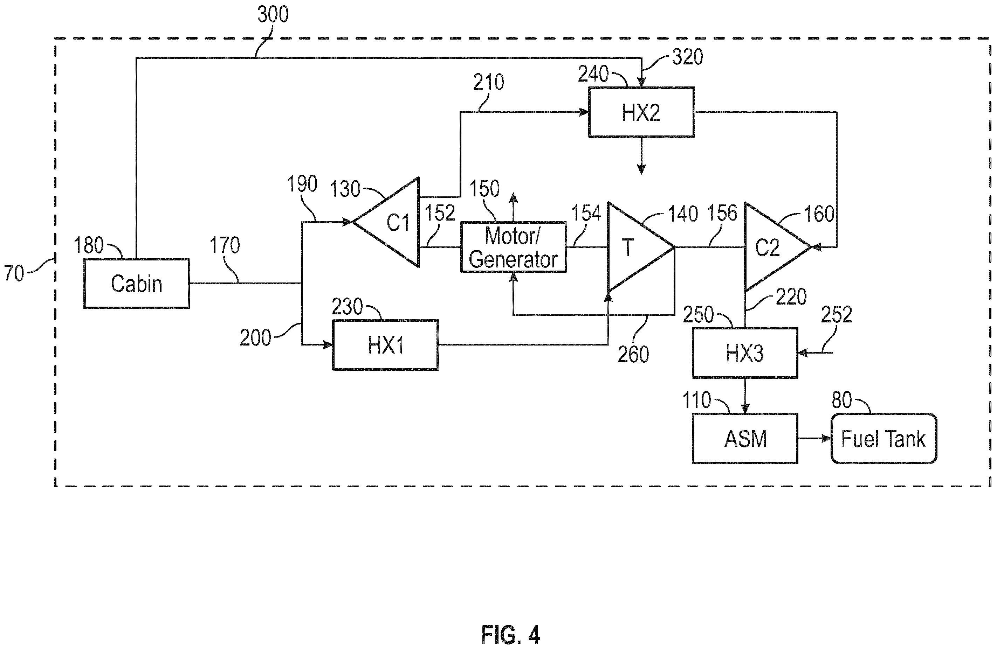

FIG. 4 shows a system for supplying source air to an air separation membrane of an aircraft according to an embodiment, where cabin air is utilized to drive a turbine so that a motor-generator may operate in a generator mode, the cabin air is further utilized as a cooling fluid in a heat exchanger of the system, and turbine exhaust of the system is utilized to cool the motor-generator;

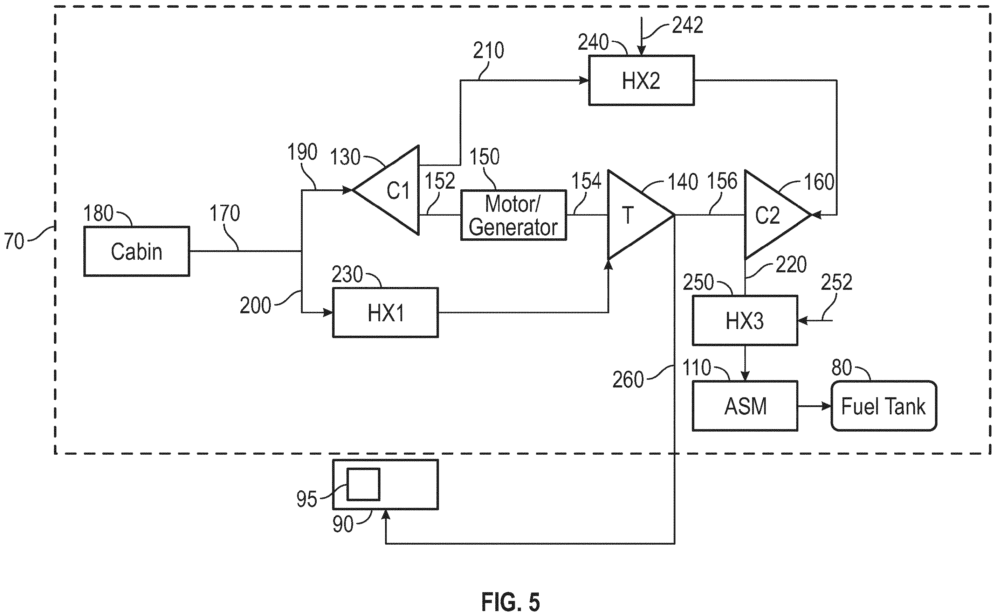

FIG. 5 shows a system for supplying source air to an air separation membrane of an aircraft according to an embodiment, where cabin air is utilized to drive a turbine so that a motor-generator may operate in a generator mode, and turbine exhaust of the system is utilized to cool a flow to a compressor of a gas turbine engine of the aircraft; and

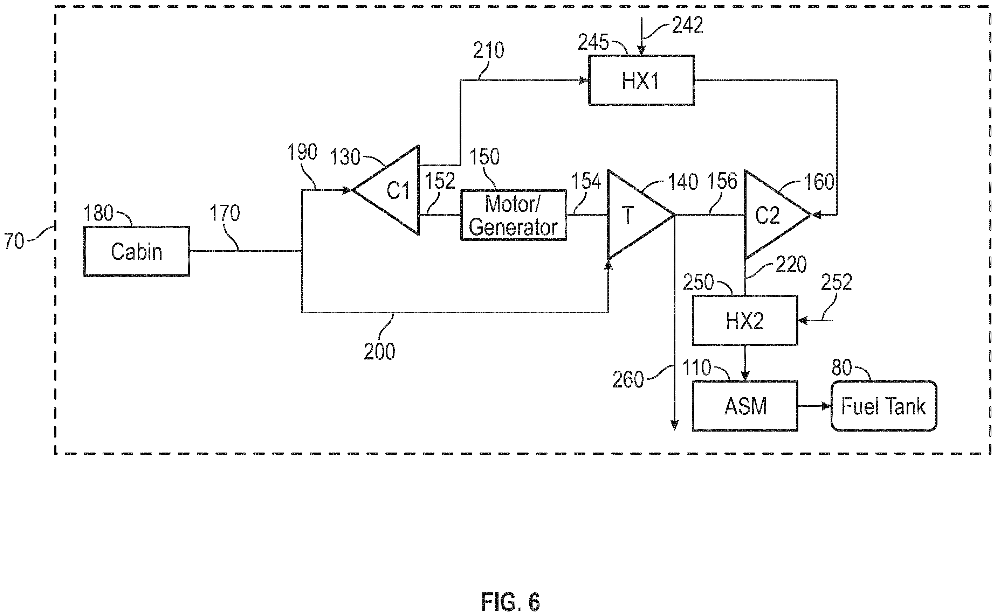

FIG. 6 shows a system for supplying source air to an air separation membrane of an aircraft according to another embodiment, where cabin air is utilized to drive a turbine so that a motor-generator may operate in a generator mode.

### DETAILED DESCRIPTION

A detailed description of one or more embodiments of the disclosed apparatus and method are presented herein by way of exemplification and not limitation with reference to the Figures.

FIG. 1 shows an aircraft 70 having a fuel tank 80. The engine may be driven by gas or another fuel turbine engine (e.g., hydrogen, low HC fuels). The aircraft 70 has a system 100 for supplying source air to an air separation membrane (ASM) 110. Air that passes through the ASM has oxygen removed from it (e.g., is more inert) and is delivered to the fuel tank 80.

The AMS 100 may be part of an on-board inert gas generating system (OBIGGS) or nitrogen generating system (NGS) that is installed the aircraft 70 for protection of the fuel tank 80. In more detail, the ASM 110 separates air into different components based on their molecular size and solubility to produce nitrogen-enriched air (NEA) from the source air. The NEA is injected it into the fuel tank 80 to keep the ullage space of the tank 80 non-flammable to reduce the risk of ignition.

The system 100 includes a first compressor 130. The system 100 also includes a turbine 140 operationally coupled to the first compressor 130. The system 100 also includes a motor-generator 150 operationally coupled to the first compressor 130 and the turbine 140. That is, the motor-generator 150 is coupled to both of the first compressor 130 and the turbine 140 via first and second shafts 152, 154. The system also includes a second compressor 160 that is operationally coupled to the turbine 140 via third shaft 156 and is configured to be fluidly coupled to the ASM 110.

A first flow-path 170 (or first conduit) is configured to receive cabin air from a cabin 180 of the aircraft 70. The first flow-path 170 has a first branch 190 that is fluidly coupled to the input of the first compressor 130. The first flow-path 170 has a second branch 200 that is fluidly coupled to the input of the turbine 140. The motor-generator 150 operates in a generator mode to drive the first compressor 130 and the second compressor 160 when pressure in the first flow-path, due to pressure in the cabin 180, is above a threshold. For example, during flight conditions, when the cabin is pressurized to around 11 PSIA, pressure in the first flow-path 170 will also increase to thereby drive the turbine 140. As such, the turbine 140 functions as an energy recovery turbine. When the aircraft 70 is not in flight or is at low altitude and the cabin 180 is not pressurized, the motor-generator 150 functions in a motor mode to drive one or more of the turbine, the first compressor 130 and the second compressor 160.

A first heat exchanger 230 is operationally coupled to the second branch 200 of the first flow-path 170 to heat flow through the second branch 200. The first heat exchanger 230 may receive blead airflow from one or more aircraft components for heating the first heat exchanger 230. By heating flow to the turbine 140, the turbine 140 may operate more efficiently. For example, the first heat exchanger 230 may be used as a heat sink in various ways. It may be used for ACM (air cycle machine) heat rejection, where the ACM has primary and secondary heat exchangers, for cabin air compressor (CAC) motor and for other sources, for oil cooling, electronics and electrics, etc.

As shown in the figures, a second flow-path 210 (or second conduit) is fluidly coupled between the output of the first compressor 130 and the input of the second compressor 160 to provide pressurized air from the first compressor 130 to the second compressor.

A second heat exchanger 240 is operationally coupled to the second flow-path 210 to cool flow through the second flow-path 210. The second heat exchanger 240 may receive RAM air 242 for cooling the flow through the second flow-path 210. By cooling flow to the second compressor 160, the second compressor 160 may also operate more efficiently.

A third flow-path 220 is fluidly coupled between the output of the second compressor 160 and the ASM 110 to provide pressurized air to ASM 110. Thus, air from the cabin 180 flows to the ASM 110 through the first compressor 130 (via the first flow-path 170 and the first branch 190, to the second compressor 160 via the second flow-path 210 and from the output of the second compressor 160 through the third flow-path 220. As noted above, the ASM 110 will then create NEA which is then provided to the fuel tank 80. A third heat exchanger 250 is operationally coupled to the third flow-path 220. The third heat exchanger 250 may also receive RAM air 252 for cooling flow through the third flow-path 220. By cooling flow to the ASM 110, and therefore the fuel tank 80, energy to the fuel tank 80 in supply air from the system 100 is reduced, thereby reducing pressure in the supply air and the risk of related complications.

Further, an exhaust flow-path 260 is fluidly coupled to the turbine 140. The exhaust flow-path 260 may direct turbine exhaust overboard. As can be appreciated, the turbine exhaust has less energy, and is therefore cooler, than flow into the turbine 140 from the second branch 200, which was heated via the first heat exchanger 230. As indicated, available energy from the cabin air is recovered by the turbine 140 to drive the motor-generator 150 and the first and second compressors 130, 160.

Thus, energy efficiency of the aircraft may be increased by utilizing available pressurized cooling energy from the cabin air to drive the turbine 140, allowing the motor-generator 150 to operate as a generator.

Turning to FIG. 2, where like numbers relative to FIG. 1 represent like aspects, the figure shows an aircraft 70 having and a fuel tank 80. The engine may be driven by gas or another fuel turbine engine (e.g., hydrogen, low HC fuels). The aircraft 70 has a system 100 for supplying source air to an air separation membrane (ASM) 110. Air that passes through the ASM has oxygen removed from it (e.g., is more inert) and is delivered to the fuel tank 80.

The AMS 100 may be part of an on-board inert gas generating system (OBIGGS) or nitrogen generating system (NGS) that is installed the aircraft 70 for protection of the fuel tank 80. In more detail, the ASM 110 separates air into different components based on their molecular size and solubility to produce nitrogen-enriched air (NEA) from the source air. The NEA is injected it into the fuel tank 80 to keep the ullage space of the tank 80 non-flammable to reduce the risk of ignition.

The system 100 includes a first compressor 130. The system 100 also includes a turbine 140 operationally coupled to the first compressor 130. The system 100 also includes a motor-generator 150 operationally coupled to the first compressor 130 and the turbine 140. That is, the motor-generator 150 is coupled to both of the first compressor 130 and the turbine 140 via first and second shafts 152, 154. The system also includes a second compressor 160 that is operationally coupled to the turbine 140 via third shaft 156 and is configured to be fluidly coupled to the ASM 110.

A first flow-path 170 (or first conduit) is configured to receive cabin air from a cabin 180 of the aircraft 70. The first flow-path 170 has a first branch 190 that is fluidly coupled to the input of the first compressor 130. The first flow-path 170 has a second branch 200 that is fluidly coupled to the input of the turbine 140. The motor-generator 150 operates in a generator mode to drive the first compressor 130 and the second compressor 160 when pressure in the first flow-path, due to pressure in the cabin 180, is above a threshold. For example, during flight conditions, when the cabin is pressurized to around 11 PSIA, pressure in the first flow-path 170 will also increase to thereby drive the turbine 140. As such, the turbine 140 functions as an energy recovery turbine. When the aircraft 70 is not in flight or is at low altitude and the cabin 180 is not pressurized, the motor-generator 150 functions in a motor mode to drive one or more of the turbine, the first compressor 130 and the second compressor 160.

A first heat exchanger 230 is operationally coupled to the second branch 200 of the first flow-path 170 to heat flow through the second branch 200. The first heat exchanger 230 may receive blead airflow from various sources indicated above for heating the first heat exchanger 230. By heating flow to the turbine 140, the turbine 140 may operate more efficiently.

As shown in the figures, a second flow-path 210 (or second conduit) is fluidly coupled between the output of the first compressor 130 and the input of the second compressor 160 to provide pressurized air from the first compressor 130 to the second compressor.

A second heat exchanger 240 is operationally coupled to the second flow-path 210 to cool flow through the second flow-path 210. The second heat exchanger 240 may receive RAM air 242 for cooling the flow through the second flow-path 210. By cooling flow to the second compressor 160, the second compressor 160 may also operate more efficiently.

A third flow-path 220 is fluidly coupled between the output of the second compressor 160 and the ASM 110 to provide pressurized air to ASM 110. Thus, air from the cabin 180 flows to the ASM 110 through the first compressor 130 (via the first flow-path 170 and the first branch 190, to the second compressor 160 via the second flow-path 210 and from the output of the second compressor 160 through the third flow-path 220. As noted above, the ASM 110 will then create NEA which is then provided to the fuel tank 80. A third heat exchanger 250 is operationally coupled to the third flow-path 220. The third heat exchanger 250 may also receive RAM air 252 for cooling flow through the third flow-path 220. By cooling flow to the ASM 110, and therefore the fuel tank 80, energy to the fuel tank 80 in supply air from the system 100 is reduced, thereby reducing pressure in the supply air and the risk of related complications.

Further, an exhaust flow-path 260 is fluidly coupled to the turbine 140. As can be appreciated, the turbine exhaust has less energy, and is therefore cooler, than flow into the turbine 140 from the second branch 200, which was heated via the first heat exchanger 230. As indicated, available energy from the cabin air is recovered by the turbine 140 to drive the motor-generator 150 and the first and second compressors 130, 160.

A fourth heat exchanger 270 is operationally coupled to the exhaust flow-path 260. The fourth heat exchanger 270 is operationally coupled to an aircraft system cooling path 280. From the fourth heat exchanger 270, the turbine exhaust may be directed overboard. This configuration utilizes the cool exhaust flow from the turbine 140 to cool flow through the aircraft system cooling path 280. The cooling flow cools an additional aircraft system 290 fluidly coupled to the aircraft system cooling path 280.

Thus, energy efficiency of the aircraft may be increased by utilizing available pressurized cooling energy from the cabin air to drive the turbine 140, allowing the motor-generator 150 to operate as a generator. The turbine exhaust flow may also be utilized to cool an additional aircraft system 290, such as electronics distributed about the aircraft, further reducing waste.

Turning to FIG. 3, where like numbers relative to FIGS. 1 or 2 represent like aspects, the figure shows an aircraft 70 having a fuel tank 80. The engine may be driven by gas or another fuel turbine engine (e.g., hydrogen, low HC fuels). The aircraft 70 has a system 100 for supplying source air to an air separation membrane (ASM) 110. Air that passes through the ASM has oxygen removed from it (e.g., is more inert) and is delivered to the fuel tank 80.

The AMS 100 may be part of an on-board inert gas generating system (OBIGGS) or nitrogen generating system (NGS) that is installed the aircraft 70 for protection of the fuel tank 80. In more detail, the ASM 110 separates air into different components based on their molecular size and solubility to produce nitrogen-enriched air (NEA) from the source air. The NEA is injected it into the fuel tank 80 to keep the ullage space of the tank 80 non-flammable to reduce the risk of ignition.

The system 100 includes a first compressor 130. The system 100 also includes a turbine 140 operationally coupled to the first compressor 130. The system 100 also includes a motor-generator 150 operationally coupled to the first compressor 130 and the turbine 140. That is, the motor-generator 150 is coupled to both of the first compressor 130 and the turbine 140 via first and second shafts 152, 154. The system also includes a second compressor 160 that is operationally coupled to the turbine 140 via third shaft 156 and is configured to be fluidly coupled to the ASM 110.

A first flow-path 170 (or first conduit) is configured to receive cabin air from a cabin 180 of the aircraft 70. The first flow-path 170 has a first branch 190 that is fluidly coupled to the input of the first compressor 130. The first flow-path 170 has a second branch 200 that is fluidly coupled to the input of the turbine 140. The motor-generator 150 operates in a generator mode to drive the first compressor 130 and the second compressor 160 when pressure in the first flow-path, due to pressure in the cabin 180, is above a threshold. For example, during flight conditions, when the cabin is pressurized to around 11 PSIA, pressure in the first flow-path 170 will also increase to thereby drive the turbine 140. As such, the turbine 140 functions as an energy recovery turbine. When the aircraft 70 is not in flight or is at low altitude and the cabin 180 is not pressurized, the motor-generator 150 functions in a motor mode to drive one or more of the turbine, the first compressor 130 and the second compressor 160.

A first heat exchanger 230 is operationally coupled to the second branch 200 of the first flow-path 170 to heat flow through the second branch 200. The first heat exchanger 230 may receive blead airflow from various sources indicated above for heating the first heat exchanger 230. By heating flow to the turbine 140, the turbine 140 may operate more efficiently.

As shown in the figures, a second flow-path 210 (or second conduit) is fluidly coupled between the output of the first compressor 130 and the input of the second compressor 160 to provide pressurized air from the first compressor 130 to the second compressor.

A second heat exchanger 240 is operationally coupled to the second flow-path 210 to cool flow through the second flow-path 210. The second heat exchanger 240 may receive RAM air 242 for cooling the flow through the second flow-path 210. By cooling flow to the second compressor 160, the second compressor 160 may also operate more efficiently.

A third flow-path 220 is fluidly coupled between the output of the second compressor 160 and the ASM 110 to provide pressurized air to ASM 110. Thus, air from the cabin 180 flows to the ASM 110 through the first compressor 130 (via the first flow-path 170 and the first branch 190, to the second compressor 160 via the second flow-path 210 and from the output of the second compressor 160 through the third flow-path 220. As noted above, the ASM 110 will then create NEA which is then provided to the fuel tank 80. A third heat exchanger 250 is operationally coupled to the third flow-path 220. The third heat exchanger 250 may also receive RAM air 252 for cooling flow through the third flow-path 220. By cooling flow to the ASM 110, and therefore the fuel tank 80, energy to the fuel tank 80 in supply air from the system 100 is reduced, thereby reducing pressure in the supply air and the risk of related complications.

Further, an exhaust flow-path 260 is fluidly coupled to the turbine 140. The exhaust flow-path 260 may direct turbine exhaust overboard. As can be appreciated, the turbine exhaust has less energy, and is therefore cooler, than flow into the turbine 140 from the second branch 200, which was heated via the first heat exchanger 230. As indicated, available energy from the cabin air is recovered by the turbine 140 to drive the motor-generator 150 and the first and second compressors 130, 160.

A fourth flow-path 300 receives cabin air and is fluidly coupled to one or both of the motor-generator 150 via a first branch 310 and the second heat exchanger 240 via a second branch 320. In the figure, the fourth flow-path 300 is fluidly coupled to both of the motor-generator 150 and the second heat exchanger 240. From the motor-generator 150 and the second heat exchanger 240, the cabin air may be directed overboard. With this configuration, cool, pressurized cabin air can be utilized to cool electronics in the motor-generator 150. In addition, rather than utilizing RAM air as cooling air for the second heat exchanger 240, the cool and pressurized cabin air may be utilized for this purpose.

Thus, energy efficiency of the aircraft may be increased by utilizing available pressurized cooling energy from the cabin air to drive the turbine 140, allowing the motor-generator 150 to operate as a generator. This same air may be utilized as cooling air for the motor-generator 150 and the second heat exchanger 240, to further reduce waste.

Turning to FIG. 4, where like numbers relative to any of FIGS. 1 to 3 represent like aspects, the figure shows an aircraft 70 having a fuel tank 80. The engine may be driven by gas or another fuel turbine engine (e.g., hydrogen, low HC fuels). The aircraft 70 has a system 100 for supplying source air to an air separation membrane (ASM) 110. Air that passes through the ASM has oxygen removed from it (e.g., is more inert) and is delivered to the fuel tank 80.

The AMS 100 may be part of an on-board inert gas generating system (OBIGGS) or nitrogen generating system (NGS) that is installed the aircraft 70 for protection of the fuel tank 80. In more detail, the ASM 110 separates air into different components based on their molecular size and solubility to produce nitrogen-enriched air (NEA) from the source air. The NEA is injected it into the fuel tank 80 to keep the ullage space of the tank 80 non-flammable to reduce the risk of ignition.

The system 100 includes a first compressor 130. The system 100 also includes a turbine 140 operationally coupled to the first compressor 130. The system 100 also includes a motor-generator 150 operationally coupled to the first compressor 130 and the turbine 140. That is, the motor-generator 150 is coupled to both of the first compressor 130 and the turbine 140 via first and second shafts 152, 154. The system also includes a second compressor 160 that is operationally coupled to the turbine 140 via third shaft 156 and is configured to be fluidly coupled to the ASM 110.

A first flow-path 170 (or first conduit) is configured to receive cabin air from a cabin 180 of the aircraft 70. The first flow-path 170 has a first branch 190 that is fluidly coupled to the input of the first compressor 130. The first flow-path 170 has a second branch 200 that is fluidly coupled to the input of the turbine 140. The motor-generator 150 operates in a generator mode to drive the first compressor 130 and the second compressor 160 when pressure in the first flow-path, due to pressure in the cabin 180, is above a threshold. For example, during flight conditions, when the cabin is pressurized to around 11 PSIA, pressure in the first flow-path 170 will also increase to thereby drive the turbine 140. As such, the turbine 140 functions as an energy recovery turbine. When the aircraft 70 is not in flight or is at low altitude and the cabin 180 is not pressurized, the motor-generator 150 functions in a motor mode to drive one or more of the turbine, the first compressor 130 and the second compressor 160.

A first heat exchanger 230 is operationally coupled to the second branch 200 of the first flow-path 170 to heat flow through the second branch 200. The first heat exchanger 230 may receive blead airflow from various sources indicated above for heating the first heat exchanger 230. By heating flow to the turbine 140, the turbine 140 may operate more efficiently.

As shown in the figures, a second flow-path 210 (or second conduit) is fluidly coupled between the output of the first compressor 130 and the input of the second compressor 160 to provide pressurized air from the first compressor 130 to the second compressor.

A second heat exchanger 240 is operationally coupled to the second flow-path 210 to cool flow through the second flow-path 210. The second heat exchanger 240 may receive RAM air 242 for cooling the flow through the second flow-path 210. By cooling flow to the second compressor 160, the second compressor 160 may also operate more efficiently.

A third flow-path 220 is fluidly coupled between the output of the second compressor 160 and the ASM 110 to provide pressurized air to ASM 110. Thus, air from the cabin 180 flows to the ASM 110 through the first compressor 130 (via the first flow-path 170 and the first branch 190, to the second compressor 160 via the second flow-path 210 and from the output of the second compressor 160 through the third flow-path 220. As noted above, the ASM 110 will then create NEA which is then provided to the fuel tank 80. A third heat exchanger 250 is operationally coupled to the third flow-path 220. The third heat exchanger 250 may also receive RAM air 252 for cooling flow through the third flow-path 220. By cooling flow to the ASM 110, and therefore the fuel tank 80, energy to the fuel tank 80 in supply air from the system 100 is reduced, thereby reducing pressure in the supply air and the risk of related complications.

Further, an exhaust flow-path 260 is fluidly coupled to the turbine 140. As can be appreciated, the turbine exhaust has less energy, and is therefore cooler, than flow into the turbine 140 from the second branch 200, which was heated via the first heat exchanger 230. As indicated, available energy from the cabin air is recovered by the turbine 140 to drive the motor-generator 150 and the first and second compressors 130, 160.

A fourth flow-path 300 receives cabin air and is fluidly coupled to the second heat exchanger 240. The exhaust flow-path 260 from the turbine 140 is fluidly coupled to the motor-generator 150. From the second heat exchanger 240, the cabin air may be directed overboard. From the motor-generator 150, the turbine exhaust flow may be directed overboard. With this configuration, rather than utilizing RAM air as cooling air for the second heat exchanger 240, the cool and pressurized cabin air may be utilized for this purpose. In addition, the cool turbine exhaust flow can be utilized to cool electronics in the motor-generator 150.

Thus, energy efficiency of the aircraft may be increased by utilizing available pressurized cooling energy from the cabin air to drive the turbine 140, allowing the motor-generator 150 to operate as a generator. This same air may be utilized as cooling air for the second compressor 160, to further reduce waste. In addition, the energy efficiency of the aircraft may be further increased by utilizing available cooling energy from the turbine 140, supplied from the cabin 180, to cool the motor-generator 150.

Turning to FIG. 5, where like numbers relative to any of FIGS. 1 to 4 represent like aspects, the figure shows an aircraft 70 having a fuel tank 80. The engine may be driven by gas or another fuel turbine engine (e.g., hydrogen, low HC fuels). The aircraft 70 has a system 100 for supplying source air to an air separation membrane (ASM) 110. Air that passes through the ASM has oxygen removed from it (e.g., is more inert) and is delivered to the fuel tank 80.

The AMS 100 may be part of an on-board inert gas generating system (OBIGGS) or nitrogen generating system (NGS) that is installed the aircraft 70 for protection of the fuel tank 80. In more detail, the ASM 110 separates air into different components based on their molecular size and solubility to produce nitrogen-enriched air (NEA) from the source air. The NEA is injected it into the fuel tank 80 to keep the ullage space of the tank 80 non-flammable to reduce the risk of ignition.

The system 100 includes a first compressor 130. The system 100 also includes a turbine 140 operationally coupled to the first compressor 130. The system 100 also includes a motor-generator 150 operationally coupled to the first compressor 130 and the turbine 140. That is, the motor-generator 150 is coupled to both of the first compressor 130 and the turbine 140 via first and second shafts 152, 154. The system also includes a second compressor 160 that is operationally coupled to the turbine 140 via third shaft 156 and is configured to be fluidly coupled to the ASM 110.

A first flow-path 170 (or first conduit) is configured to receive cabin air from a cabin 180 of the aircraft 70. The first flow-path 170 has a first branch 190 that is fluidly coupled to the input of the first compressor 130. The first flow-path 170 has a second branch 200 that is fluidly coupled to the input of the turbine 140. The motor-generator 150 operates in a generator mode to drive the first compressor 130 and the second compressor 160 when pressure in the first flow-path, due to pressure in the cabin 180, is above a threshold. For example, during flight conditions, when the cabin is pressurized to around 11 PSIA, pressure in the first flow-path 170 will also increase to thereby drive the turbine 140. As such, the turbine 140 functions as an energy recovery turbine. When the aircraft 70 is not in flight or is at low altitude and the cabin 180 is not pressurized, the motor-generator 150 functions in a motor mode to drive one or more of the turbine, the first compressor 130 and the second compressor 160.

A first heat exchanger 230 is operationally coupled to the second branch 200 of the first flow-path 170 to heat flow through the second branch 200. The first heat exchanger 230 may receive blead airflow from various sources indicated above for heating the first heat exchanger 230. By heating flow to the turbine 140, the turbine 140 may operate more efficiently.

As shown in the figures, a second flow-path 210 (or second conduit) is fluidly coupled between the output of the first compressor 130 and the input of the second compressor 160 to provide pressurized air from the first compressor 130 to the second compressor.

A second heat exchanger 240 is operationally coupled to the second flow-path 210 to cool flow through the second flow-path 210. The second heat exchanger 240 may receive RAM air 242 for cooling the flow through the second flow-path 210. By cooling flow to the second compressor 160, the second compressor 160 may also operate more efficiently.

A third flow-path 220 is fluidly coupled between the output of the second compressor 160 and the ASM 110 to provide pressurized air to ASM 110. Thus, air from the cabin 180 flows to the ASM 110 through the first compressor 130 (via the first flow-path 170 and the first branch 190, to the second compressor 160 via the second flow-path 210 and from the output of the second compressor 160 through the third flow-path 220. As noted above, the ASM 110 will then create NEA which is then provided to the fuel tank 80. A third heat exchanger 250 is operationally coupled to the third flow-path 220. The third heat exchanger 250 may also receive RAM air 252 for cooling flow through the third flow-path 220. By cooling flow to the ASM 110, and therefore the fuel tank 80, energy to the fuel tank 80 in supply air from the system 100 is reduced, thereby reducing pressure in the supply air and the risk of related complications.

Further, an exhaust flow-path 260 is fluidly coupled to the turbine 140. The exhaust flow-path 260 may direct turbine exhaust to the engine 90 and more specially to an engine compressor 95 within the engine 90. As can be appreciated, the turbine exhaust has less energy, and is therefore cooler, than flow into the turbine 140 from the second branch 200, which was heated via the first heat exchanger 230. Thus, turbine vents air after the turbine or heat exchanger, which may be directed into the main engine, the APU engines or to a fuel cell. That is, an advantage of the disclosed system is that electric power generated in the turbine may be utilized for aircraft power, CAC motor, VCS (vapor cycle system) motor, the VCS or wing de-icing. As indicated, available energy from the cabin air is recovered by the turbine 140 to drive the motor-generator 150 and the first and second compressors 130, 160.

Thus, energy efficiency of the aircraft may be increased by utilizing available pressurized cooling energy from the cabin air to drive the turbine 140, allowing the motor-generator 150 to operate as a generator. In addition, the energy efficiency of the aircraft may be further increased by utilizing available cooling energy from the turbine 140, supplied from the cabin 180, to cool flow into the engine compressor 95, and increase the efficiency of the engine 90.

Turning to FIG. 6, where like numbers relative to any of FIGS. 1 to 5 represent like aspects, the figure shows an aircraft 70 having a fuel tank 80. The engine may be driven by gas or another fuel turbine engine (e.g., hydrogen, low HC fuels). The aircraft 70 has a system 100 for supplying source air to an air separation membrane (ASM) 110. Air that passes through the ASM has oxygen removed from it (e.g., is more inert) and is delivered to the fuel tank 80.

The AMS 100 may be part of an on-board inert gas generating system (OBIGGS) or nitrogen generating system (NGS) that is installed the aircraft 70 for protection of the fuel tank 80. In more detail, the ASM 110 separates air into different components based on their molecular size and solubility to produce nitrogen-enriched air (NEA) from the source air. The NEA is injected it into the fuel tank 80 to keep the ullage space of the tank 80 non-flammable to reduce the risk of ignition.

The system 100 includes a first compressor 130. The system 100 also includes a turbine 140 operationally coupled to the first compressor 130. The system 100 also includes a motor-generator 150 operationally coupled to the first compressor 130 and the turbine 140. That is, the motor-generator 150 is coupled to both of the first compressor 130 and the turbine 140 via first and second shafts 152, 154. The system also includes a second compressor 160 that is operationally coupled to the turbine 140 via third shaft 156 and is configured to be fluidly coupled to the ASM 110.

A first flow-path 170 (or first conduit) is configured to receive cabin air from a cabin 180 of the aircraft 70. The first flow-path 170 has a first branch 190 that is fluidly coupled to the input of the first compressor 130. The first flow-path 170 has a second branch 200 that is fluidly coupled to the input of the turbine 140. The motor-generator 150 operates in a generator mode to drive the first compressor 130 and the second compressor 160 when pressure in the first flow-path, due to pressure in the cabin 180, is above a threshold. For example, during flight conditions, when the cabin is pressurized to around 11 PSIA, pressure in the first flow-path 170 will also increase to thereby drive the turbine 140. As such, the turbine 140 functions as an energy recovery turbine. When the aircraft 70 is not in flight or is at low altitude and the cabin 180 is not pressurized, the motor-generator 150 functions in a motor mode to drive one or more of the turbine, the first compressor 130 and the second compressor 160.

As shown in the figures, a second flow-path 210 (or second conduit) is fluidly coupled between the output of the first compressor 130 and the input of the second compressor 160 to provide pressurized air from the first compressor 130 to the second compressor.

One heat exchanger 245 is operationally coupled to the second flow-path 210 to cool flow through the second flow-path 210. The one heat exchanger 245 may receive RAM air 242 for cooling the flow through the second flow-path 210. By cooling flow to the second compressor 160, the second compressor 160 may operate more efficiently.

A third flow-path 220 is fluidly coupled between the output of the second compressor 160 and the ASM 110 to provide pressurized air to ASM 110. Thus, air from the cabin 180 flows to the ASM 110 through the first compressor 130 (via the first flow-path 170 and the first branch 190, to the second compressor 160 via the second flow-path 210 and from the output of the second compressor 160 through the third flow-path 220. As noted above, the ASM 110 will then create NEA which is then provided to the fuel tank 80. Another heat exchanger 255 is operationally coupled to the third flow-path 220. The another heat exchanger 255 may also receive RAM air 252 for cooling flow through the third flow-path 220. By cooling flow to the ASM 110, and therefore the fuel tank 80, energy to the fuel tank 80 in supply air from the system 100 is reduced, thereby reducing pressure in the supply air and the risk of related complications.

Further, an exhaust flow-path 260 is fluidly coupled to the turbine 140. The exhaust flow-path 260 may direct turbine exhaust overboard. As can be appreciated, the turbine exhaust has less energy, and is therefore cooler, than flow into the turbine 140 from the second branch 200, which was heated via the first heat exchanger 230. As indicated, available energy from the cabin air is recovered by the turbine 140 to drive the motor-generator 150 and the first and second compressors 130, 160.

It is to be appreciated that a difference between the embodiments in FIGS. 1 and 6 is that FIG. 1 includes an additional heat exchanger located in the second branch 200 to heat flow into the turbine 140.

Thus, energy efficiency of the aircraft may be increased by utilizing available pressurized cooling energy from the cabin air to drive the turbine 140, allowing the motor-generator 150 to operate as a generator.

In the disclosed embodiments, cabin air is utilized as a heat sink. As a result, in certain configurations, RAM air is not needed to cool components, so that RAM doors may be closed to reduce drag. In certain embodiments, turbine expanded cabin air may be employed for plane propulsion gain by increasing engine efficiency. A low temperature of the air after turbine expansion also allows its usage as a heat sink. In situations when available energy falls below inerting system demands, the motor-generator may be engaged either generating power or supplementing it.

By utilizing cabin exhaust, benefits of the embodiments include reducing an energy consumption by the OBIGGS or NEA system, thereby reducing a size of the motor. Additionally, the system enables the utilization of a motor-generator in an OBIGGS or NEA system and provides additional engine power generation and propulsion efficiency.

The terminology used herein is for the purpose of describing particular embodiments only and is not intended to be limiting of the present disclosure. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, element components, and/or groups thereof.

Those of skill in the art will appreciate that various example embodiments are shown and described herein, each having certain features in the particular embodiments, but the present disclosure is not thus limited. Rather, the present disclosure can be modified to incorporate any number of variations, alterations, substitutions, combinations, sub-combinations, or equivalent arrangements not heretofore described, but which are commensurate with the scope of the present disclosure. Additionally, while various embodiments of the present disclosure have been described, it is to be understood that aspects of the present disclosure may include only some of the described embodiments. Accordingly, the present disclosure is not to be seen as limited by the foregoing description, but is only limited by the scope of the appended claims.

## Claims

1. A system for supplying source air to an air separation membrane "ASM" of an inerting system of an aircraft, the system comprising:
a first compressor (130);
a turbine (140), operationally coupled to the first compressor (130);
a motor-generator (150), operationally coupled to the first compressor (130) and the turbine (140);
a second compressor, operationally coupled to the turbine (140) and configured to be fluidly coupled to the air separation membrane;
a first flow-path configured to receive cabin air from a cabin of the aircraft, the first flow-path having: a first branch, fluidly coupled to the first compressor (130); and a second branch, fluidly coupled to the turbine (140), wherein the motor-generator (150) operates in a generator mode when pressure in the first flow-path is above a threshold;
a second flow-path, fluidly coupled between the first compressor (130) and the second compressor;
a third flow-path, fluidly coupled between the second compressor, a fuel tank and the ASM;
a first heat exchanger, operationally coupled to the second branch of the first flow-path to heat flow through the second branch before it is provided to the turbine (140); and
a second heat exchanger, operationally coupled to the second flow-path between the first compressor (130) and the second compressor to cool the flow through the second flow-path.

2. The system of claim 1, wherein:
the motor-generator (150) operates in a motor mode and drives the turbine (140) when pressure in the first flow-path is below the threshold.

3. The system of any preceding claim, further comprising:
a third heat exchanger, operationally coupled to the third flow-path to cool the flow through the third flow-path, wherein the air separation membrane is disposed in the third flow-path, between the third heat exchanger and the fuel tank.

4. The system of claim 3, further comprising:
an exhaust flow-path, fluidly coupled to the turbine (140).

5. The system of any preceding claim, wherein:
the first heat exchanger receives air from an aircraft component to heat the flow through the second branch.

6. The system of any preceding claim, wherein:
the second heat exchanger receives RAM air to cool the flow through the second flow-path.

7. The system of claim 4, wherein:
the third heat exchanger receives RAM to cool the flow through the third flow-path, and optionally further comprising:
a fourth heat exchanger, operationally coupled to the exhaust flow-path and an aircraft system cooling path, to cool the flow through the aircraft system cooling path, thereby cooling an aircraft system.

8. The system of claim 4, comprising:
a fourth flow-path that receives the cabin air and is fluidly coupled to one or both of the motor-generator (150) and the second heat exchanger.

9. The system of claim 8, wherein:
the fourth flow-path is fluidly coupled to both of the motor-generator (150) and the second heat exchanger, or wherein:
the fourth flow-path is fluidly coupled to the second heat exchanger; and
the exhaust flow-path is fluidly coupled to the turbine (140) and the motor-generator (150) to cool the motor-generator (150).

10. The system of claim 4, wherein:
the exhaust flow-path is fluidly coupled to a compressor of a gas turbine engine.

11. A system for supplying source air to an air separation membrane "ASM" of an inerting system of an aircraft, the system comprising:
a first compressor (130);
a turbine (140), operationally coupled to the first compressor (130);
a motor-generator (150), operationally coupled to the first compressor (130) and the turbine (140),
a second compressor (160), operationally coupled to the turbine (140) and configured to be fluidly coupled to the air separation membrane;
a first flow-path configured to receive cabin air from a cabin of the aircraft, the first flow-path having: a first branch, fluidly coupled to the first compressor (130); and a second branch, fluidly coupled to the turbine (140), wherein the motor-generator (150) operates in a generator mode when pressure in the first flow-path is above a threshold;
a second flow-path, fluidly coupled between the first compressor (130) and the second compressor (160);
a third flow-path, fluidly coupled between the second compressor (160), a fuel tank and the ASM; and
one heat exchanger, operationally coupled to the second flow-path to cool flow through the second flow-path before it is provided to the turbine (140).

12. The system of claim 11, wherein:
the motor-generator (150) operates in a motor mode and drives the turbine (140) when pressure in the first flow-path is below the threshold.

13. The system of claim 11 or 12, further comprising:
another heat exchanger, operationally coupled to the third flow-path between the first compressor (130) and the second compressor (160) to cool the flow through the third flow-path,
wherein the air separation membrane is disposed in the third flow-path, between the another heat exchanger and the fuel tank.

14. The system of claim 11, 12 or 13,further comprising:
an exhaust flow-path, fluidly coupled to the turbine (140).

15. The system of claim any of claims 11 to 14, wherein:
the one heat exchanger receives RAM air to cool the flow through the second flow-path.
